# EUROPEAN PATENT APPLICATION

(11) **EP 0 643 469 A1**
(43) Date of publication of application: **15.03.1995**
(21) Application number: 94306678.7
(22) Date of filing: 09.09.1994
(51) Int. Cl.: H02K 37/14, H02K 37/10, H02K 41/03, F16M 11/18

(54) **Apparatus for rotating a load carrying base**

(30) Priority: 10.09.1993 JP 249898/93
(71) Applicant: TOKAI RUBBER INDUSTRIES, LTD., Komaki-shi Aichi 485 (JP)
(72) Inventor: Muramatsu, Atsushi, Komaki-shi, Aichi 485 (JP); Nagano, Etsuko, Iwakura-shi, Aichi 482 (JP); Ide, Akiyoshi, Inuyama-shi, Aichi 484 (JP); Goto, Katsuhiro, 1120-1 Azakomeno, Inuyama-shi Aichi 484 (JP)
(74) Representative: Wakerley, Helen Rachael

(57) **Abstract**

An apparatus for rotating a base carrying heavy matter, which can actuates automatically a rotation table for rotating a base on which a person or the like is placed slowly at a desired angle.

A rotation device 20 having a cylindrical stator 23 is installed on a rectangular frame 21. Twelve iron cores 23b are arranged inwardly at equal intervals inside a circumference of the iron core 23a of the cylindrical stator 23. A Coil 23c is wound on each iron core 23b to be formed into an electromagnet M. A disc-shaped rotor 24 is provided inside the stator wherein eight permanent magnets 24a are arranged at specific intervals on the periphery so as to alternate N pole and S pole. A rotation axis 25 is set up in center of the rotor. The rotation axis is supported to an upper plate 27 and a bottom plate 28 by bearings 27a and 28a rotatably. A base carrying heavy matter is fixed on the upper end of the rotation axis horizontally. The base can be rotated at a desired angle by delivering electric current to electromagnets by power supply/control device 40.

## Description

### FIELD OF THE INVENTION

The present invention is directed to an apparatus for rotating a base on which heavy matter is carried, for example, an apparatus for rotating a base on which a bed for nursing a person is mounted through a certain angle at a low speed.

### BACKGROUND OF THE INVENTION

Heretofore, operations such as raising or rotating the upper half and the like of a person to be cared for on a bed placed on a base carrying heavy matter (hereinafter referred to sometimes as the base) have been conducted mainly by man power. However, there was a problem because it was difficult for a person of little strength or a child to conduct such operations.

For this reason, a method for driving the base carrying heavy matter by an electrical motor is proposed. In this case, since the base must be moved at a low speed to prevent an impact on a person or matter placed thereon, a number of revolution of the electrical motor is converted into a low number, which is transmitted to the base by installing a gear or a sprocket on a rotation axis for the electric motor and the base. Besides, a torque to the base is increased by lowering the number of rotation.

However, in case of the above apparatus for driving a base carrying heavy matter, there is a problem of cost increase because the apparatus becomes large-size and complicated by necessity for intervention of a deceleration gear and the like. There is another problem of difficulty of man-power operation without electric power because a load is generated on the plate in proportion to the gear ratio. Further, if a clutch is added to avoid such a problem, there causes a problem of cost increase again here because the apparatus becomes larger and more complicated.

### OBJECT OF THE INVENTION

Therefore, the object of the present invention is to solve the above problems by providing an apparatus for rotating a base carrying heavy matter in a simple structure which enables an automatic operation.

### SUMMARY OF THE INVENTION

The invention provides an apparatus for rotating a base on which heavy matter is carried, comprising a rotation axis rotatably supported by a housing, a disc rotor or a circular arc rotor fixed vertically to an axial direction of the rotation axis wherein plural magnets are positioned at specific intervals each other around its periphery so as to alternate polarities, a stator having plural electromagnets fixed on the housing so as to face the magnet around the rotor or in an upper/lower relationship with the rotor, means for supplying and controlling electric power to the electromagnets, and a rotation actuating device fixed on a frame, the base carrying weight matter installed vertically or horizontally to the rotation axis.

The invention provides, in a second aspect, an apparatus for rotating a base on which heavy matter is carried, comprising a rotation axis rotatably supported by a housing, a disc rotor or a circular arc rotor fixed vertically to an axial direction of the rotation axis wherein plural electromagnets are positioned at a certain space each other around its periphery, a stator having plural magnets fixed to the housing so as to alternate polarities and face the electromagnet around the rotor or in an upper/lower relationship with the rotor, means for supplying electric power to the electromagnet and rotation actuating device fixed on a frame, the base carrying weight matter installed vertically or horizontally to the rotation axis.

The invention provides in a third aspect an apparatus for rotating a base on which heavy matter is carried defined in the first or the second aspect wherein means for stopping compulsorily the rotation of the base is established.

The present invention is now described in further detail.

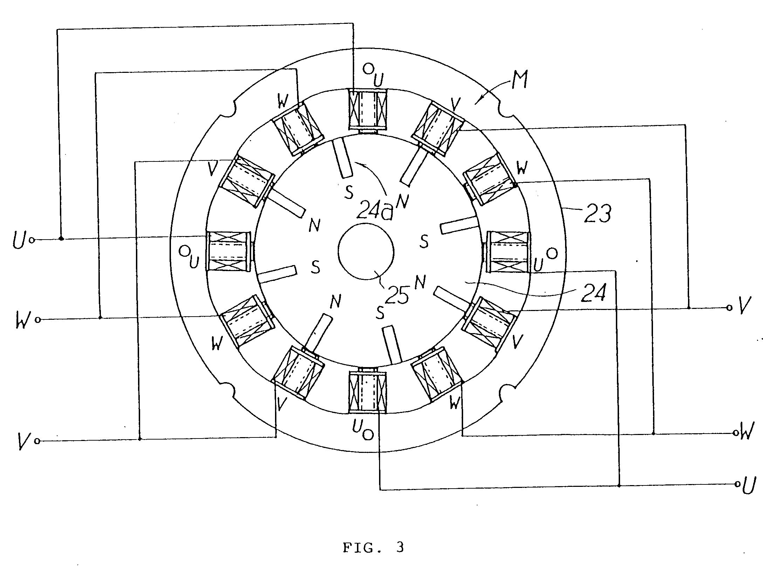

The operation or the apparatus for rotating a base on which a load is carried is described, for example, based upon Fig. 3, an illustration of the fundamentals of the present invention. The rotor has a number of permanent magnets and the stator three groups of electromagnets: U, V and W. First of all, an electric current is delivered to the U-group electromagnets to turn their poles into, for example, N poles (U poles). If an S pole of those around the rotor is positioned at an angle of 15° to anyone of the U poles, this S pole is attracted and a neighbouring N pole on the rotor is repulsed by the stator U pole, so that the rotor starts to rotate. When the S pole on the rotor has reached the U pole, the V-group electromagnets are subsequently energised into N poles (V poles) by the means for supplying electric power. Neighbouring N poles on the rotor are repulsed and S poles on the motor are attracted, so that the rotor starts to rotate. When the S pole on the rotor rotates through 30° and reaches any of the V poles, the W-group electromagnets are energised into N poles (W poles) by the means for supplying electric power so as to rotate the rotor through 30° in the same way.

### EFFECTS OF THE INVENTION

The rotor can be rotated at a desirable angle by the repetition of the above operation. At the same time, an apparatus for rotating a base carrying heavy matter, which connects to the rotor through a rotation axis, can be rotated at a desirable angle.

Further, a rotation speed of the rotor can be controlled by varying voltage and frequency so that a desirable rotation speed can be easily realized, which does not give a shock to a person and the like placed on the base of the apparatus. Furthermore, the rotor can be rotated slowly and smoothly by increasing each poles' numbers of the rotor and the stator. Furthermore, since the base of the apparatus is rotated by attraction and repulsion power of magnets, whose inertia force is small, the base can be stopped with accuracy.

Besides, since the base of the apparatus is only connected with the rotor through the rotation axis and is not acquired by the stator, the base can be easily rotated by man power.

In addition, the above apparatus for rotating the base carrying heavy matter has a simple structure wherein the base carrying heavy matter is connected to the rotor through the rotation axis, the apparatus can be miniaturized and lightened.

In the above second aspect of the present invention, wherein a rotor is installed with an electromagnet, a current delivered to the electromagnet so as to generate attraction and repulsion power with the magnet of the stator, resulting in the rotation of the rotor. Therefore, the same effect can be obtained as the first aspect.

In the above third aspect, wherein means for rotating and stopping the base is installed, the base can be stopped at a more precise angle.

### BRIEF DESCRIPTION OF DRAWINGS

Fig. 1 is a front view, broken away to show a rotation table of EXAMPLE 1, according to the present invention,
Fig. 2 is a sectional view taken on line II - II in Fig. 1,
Fig. 3 is a schematic plan view illustrating rotors and stators of a rotation device of the rotation table and their polarities,
Fig. 4 is a schematic sectional view illustrating a stopper installed in the rotation device,
Fig. 5 is a circuit diagram illustrating a circuit composition of means for supplying electric power to the rotation table,
Fig. 6 schematically illustrates a bed for nursing a person according to EXAMPLE 2 of the present invention,
Fig. 7 is a plan view in partially section, illustrating how the rotation device is installed,
Fig. 8 is a schematic front view illustrating rotors and stators of the rotation apparatus and their polarities and
Fig. 9 illustrates a modification in another arrangement of rotors and stators of the rotation device.

### EXAMPLE 1

Now, EXAMPLE 1 of the present invention is described referring to drawings.

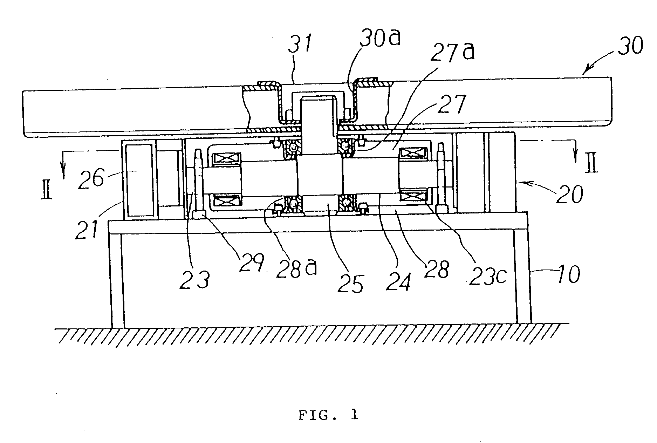

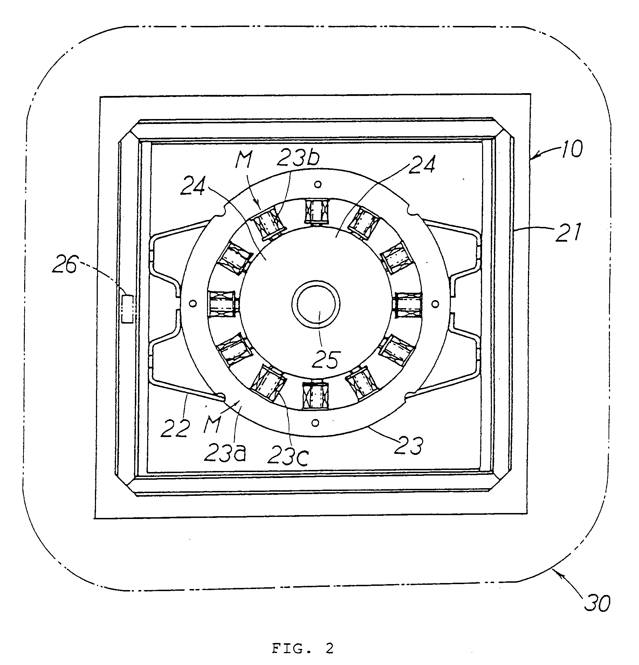

Fig. 1 and 2 show schematically a rotation table which rotates heavy matter weighing about 5 to 100kgs mounted thereon at a low speed. This rotation table is equipped with a platform 10 set up on a ground, a rotation device 20 mounted upon the platform 10, and a base carrying heavy matter 30 installed vertically on a rotation axis of the rotation device 20.

The rotation device 20 is installed within a steel rectangular frame 21 placed on the platform 10 and is supported by hardwares shaped into character "W" at both sides of right hand and left hand inside the frame so as to be fixed to the frame 21. The rotation device 20 is equipped with a cylindrical stator 23 at its peripheral area.

The stator 23 formed by magnetic material is provided with a cylindrical iron core 23a of 220mmφ in outside diameter, wherein twelve iron cores 23b shaped into rectangular prism, whose inner end is wider, are arranged at specific intervals inwardly on the cylindrical iron core. The material of iron cores 23a and 23b desirably has high magnetic permeability and high saturation magnetic flux density. Specifically, in addition to iron, soft magnetic iron (SUY) of a little carbon content, permalloy, or the like can be employed. Or, a lamination of silicon steel plate (magnetic steel plate) can decrease eddy current loss to a low level, resulting in a high performance. An electromagnet M is formed by winding copper coil 23c on the iron core 23b at 220 times on one direction. As typically shown in Fig. 3, four electromagnets M are provided each for U, V and W phases respectively in that order. Necessary insulating treatment is conducted between the iron core 23b and the coil 23c respectively for phases U, V and W. Such an insulating treatment is conducted by protecting with insulating film or paper, impregnating into epoxy or phenol varnish to be hardened, or employing resin bobbin and the like.

Each U, V and W phase is connected to a power supply/control device 40, as mentioned later.

A doughnut-shaped rotor 24 of 130mmφ in outside diameter is provided inside the iron cores 23b which are separated by a gap of 0.5mm. The rotor 24, as typically shown in Fig. 3, has eight permanent magnets 24a at specific intervals at a peripheral area so as to alternate N pole and S pole. The material of the magnet 24 may be solely or in combination made of sintered aeolotropic strontium ferrite (SrO· 6(Fe₂ O₃)), sintered aeolotropic barium ferrite (BaO· 6(Fe₂O₃)), plastic compound mould containing either or both of the above two kinds of ferrite by 82% or more by weight, neodymium · iron · boron sintered magnet, samarium cobalt magnet (SmCo₅, Sm₂Co₁₇), plastic compound containing amorphous neodymium · iron · boron powder by 82% or more by weight. The diameter of the rotor is preferably not less than 50 mm φ to decrease driving current value and not more than 250mmφ to be put under the rotating parts, most preferably, between 130 and 200mm φ .

A rotation axis 25 is engaged into a center hole 24b of the rotor 24. The rotation axis 25 is installed integrally on the rotor 24 in moulding.

The stator 23 and the rotor 24 are sandwiched between an upper plate 27 and a bottom plate 28, wherein the stator 23 is fixed to both plates 27 and 28 with a bolt 29. The rotor 24 is supported rotatably by bearings 27a and 28a installed inside a center thru-hole of both plates 27 and 28.

The base carrying weight matter 30 is fixed at a center concave part 30a by a fixing member 31 on the upper end of the rotation axis 25. On the reverse side of the base 30, a plurality of holes 30b are made on the circumference corresponding to the position of a pin 26d of a stopper 26 which is mentioned later.

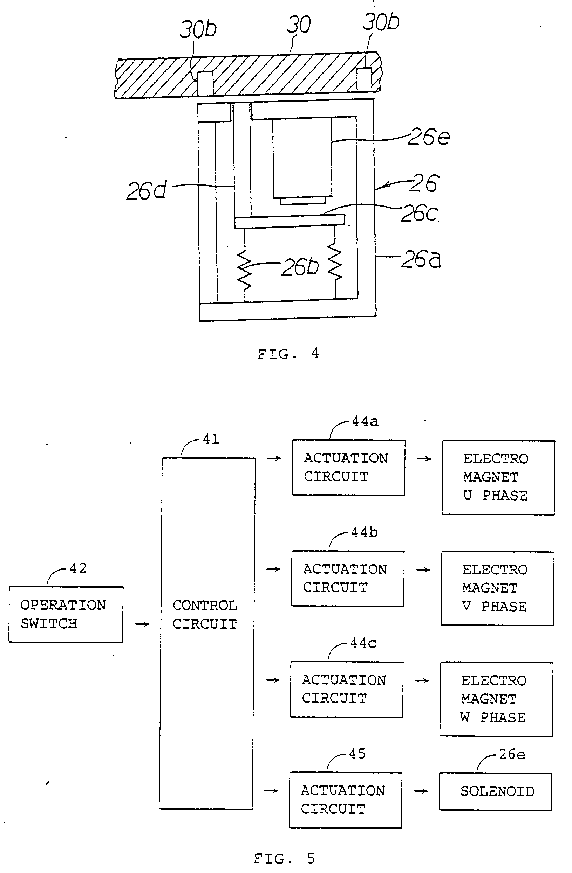

The stopper 26, which stops the rotation of the base 30, is established on the left center of the frame 21. The stopper 26, as shown in Fig. 4, comprises a spring 26b, installed on the bottom plate of a box 26a, a suction plate 26c installed on the opposite end of the spring 26b, a pin 26d installed vertically on one end of the suction plate 26c, an electromagnetic solenoid 26e installed so as to face the suction plate 26c under the upper plate of the box 26a. The pin 26d is positioned at a lower level than the upper plate by energy of the spring 26b. When the electromagnetic solenoid 26e is magnetized and the suction plate 26c is attracted thereby, the pin is pushed upward beyond the upper plate.

Then, referring to Fig. 5, a power supply/control device 40 of the above rotation table will be described. The electric supply control device 40 is provided with a control circuit 41 comprising a microcomputer and the like. A operation switch 42 is connected to in-put side of the control circuit 41. On the other hand, the electromagnet U, V and W phases and the electromagnetic solenoid 26e are connected with out-put side through driving circuits 44a, 44b, 44c and 45. In addition, a hard circuit may be employed as a control circuit.

Referring to Fig. 3, the operation of the above example will be further described.

Now, how to rotate the base 30 at 180° is described. If the operation switch 42 is on, the power supply/control device 40 delivers electric current to U phase for a specific time so as to be N polarization. S pole, a permanent magnet, separated from the U phase at 15° is attracted by the U phase so that the rotor rotates clockwise for 15° . Then, V phase is magnetized to be N polarization by delivering electric current thereto for a specific time. The N pole of the permanent magnet separated from V phase at 15° is repulsed by the V phase and S pole of the permanent magnet is attracted thereby, so that the rotor 24 rotates clockwise for 30° . In addition, W phase is magnetized to be N polarization by delivering electric current thereto for a specific time. The N pole of the permanent magnet separated from W phase at 15 ° is repulsed by the W phase and S pole of the permanent magnet is attracted thereby, so that the rotor 24 rotates clockwise for 30 °.

When the rotor 24 is rotated for 15° at the third supply to the U phase after electric current supply to these U, V and W phases is repeated, the operation switch 42 is off so as to stop the rotation of the base by cutting off the current to the U phase. At the same time, the electromagnetic solenoid 26e is supplied with electric current so that the pin 26d is moved upward by action of the stopper 26 and is inserted into the hole 30b of the base 30, which can be forced to stop the base 30. Thus, the base 30 can be stopped surely and also the base 30 can be moved to a desired position.

At that time, the voltage supplied to electromagnet M is controlled so that the rotor 24 rotates slowly, which prevents a person or a cargo on the base from being shocked or upset.

In addition, since the rotation speed of the base 30 is slow and its inertia force is small, it can fully stop the base 30 at a desirable position approximately only if power supply is cut off by switching off the operation switch 42. Therefore, the stopper 26 can be deleted in accordance with the case.

As aforementioned, the above rotation table can be rotated by repulsion and attraction of the magnet so that the base carrying weight matter connected with the rotor can be rotated to a desirable position. Further, the rotation speed of the rotor can be controlled by voltage and frequency supplied to the electromagnet, so that a desirable low speed rotation can be realized, resulting in no shock occurred to a person and the like placed on the base.

Furthermore, since the base is not acquired by the stator and only connected with the rotor through the rotation axis, the load for rotation is small, which realizes easy operation by man power without power supply.

Still furthermore, since the apparatus has a simple structure wherein the base is connected with the rotor through the rotation axis, the apparatus can be smaller and lighter, resulting in cost decrease.

### EXAMPLE 2

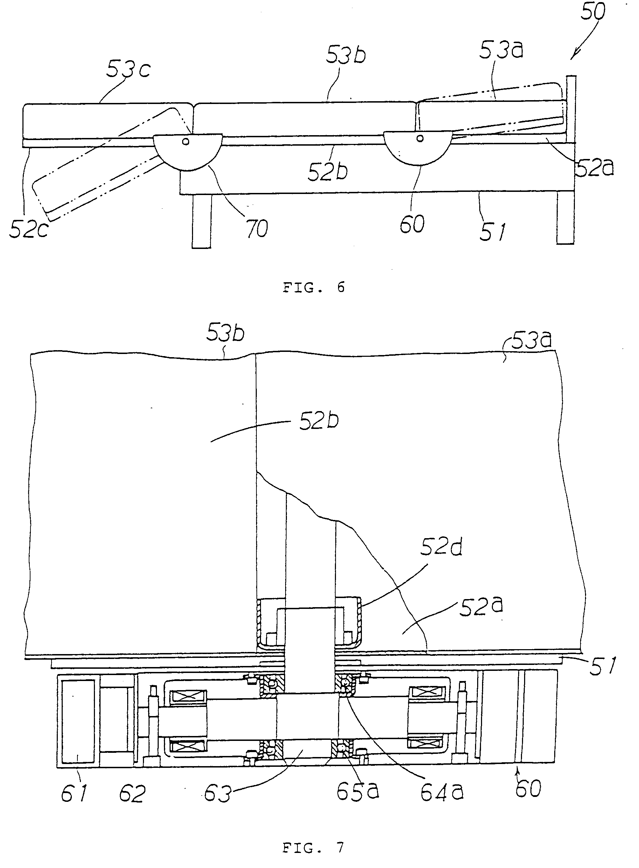

Fig. 6 and 7 are a front view and a partly enlarged perspective side view of the bed for nursing a person, respectively. The bed 50 comprises a platform 51, three sections of floor plates thereon 52a, 52b and 52c, a back cushion 53a, a waist cushion 53b and a leg cushion 53c mounted on the floor plates 52a, 52b and 52c respectively.

Rotation devices 60 and 70 are installed between the floor plates 52a and 52b, and 52b and 52c on the platform 51.

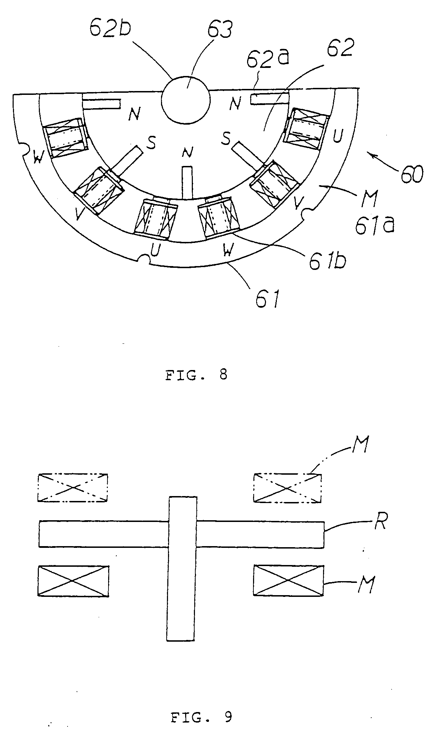

The rotation angle of the rotation device 60 (the rotation device 70 has the same structure) is limited within 90° , whose structure is approximately a half divisional part of the rotation device 20 mentioned in the above EXAMPLE 1. That is, as shown in Fig. 7 and 8, the rotation device 60 is equipped with a half cylindrical stator 61 of 200mm φ in outside diameter. The rotation device 60 is connected to the base 51 by fixing the side wall of the stator 61 to the base 51. At an inner peripheral area of the stator 61, six pieces of core 61a of a rectangular prism, whose inner end is wider, are arranged at specific intervals. An electromagnet M is formed with the coil 61b wiring on the core 61a. As shown in Fig. 8, two sets of U, V and W phases are arranged in that order. A couple coils in each of U, V and W phases are bundled, not shown in figure, to be connected with a power supply/control device 40.

A rotor 62 shaped into a half doughnut of 130mmφ in outside diameter is arranged inside the core 61a. As shown in Fig. 8, four permanent magnets 62a are arranged so as to alternate N pole and S pole at specific intervals in the peripheral area of the rotor 62. A rotation axis 63 is engaged into a center hole 62b integrally. The rotation axis 63 is rotatably supported with bearings 64a and 65a established on front and rear walls of the stator 61.

The rotation axis 63 is fixed to the left end of the floor plate 52a with the support hardware 52d. Since the power supply/control device delivering current to each rotation device 60 and 70 is the same as that of the EXAMPLE 1, description thereof is omitted.

Now, operations of EXAMPLE 2 will be described.

When rotating a bed for nursing 50 at 60 ° , the operation switch 42 is turned on so that the power supply/control device 40 delivers current to the U phase to polarize U phase into N pole. N pole of the rotor 62 is repulsed and S pole is attracted, resulting in counterclockwise rotation of 30° . Furthermore, if V phase is polarized into N pole by current supply, N pole of the rotor 62 is repulsed and S pole is attracted so that the rotor 62 rotates counterclockwise. When the rotor rotates at 15° counterclockwise, if rotation of the rotor 62 is stopped by the operation switch 42 and the rotor 62 is maintained by a stopper or the like, the floor plate 52a is kept tilted of 60 °. The floor plate 52c is operated in the same way. Thus, the angle of rotating the floor plates 52a and 52c can be set at a desirable angle by controlling the operation switch.

As mentioned above, since this bed for nursing a person has a simple structure wherein a floor plate is connected with the rotor through cushion parts can be rotated to a desirable position at a low speed. Therefore, it will not give useless shock on a patient and the like on the bed. Since the above bed has a simple structure, it can be miniaturized and lightened, resulting in cost decrease.

Further, permanent magnets are installed on the rotor of the rotation device while electromagnets are installed on the stator in the above examples. However, electromagnet may be installed on the rotor while permanent magnet may be installed on the stator. In such a structure, electric power is delivered to the rotor for rotation.

Furthermore, an electromagnet may be employed instead of a permanent magnet in the rotation device.

Still furthermore, magnets arranged in the peripheral area of the rotor face electromagnets arranged in the inner circle of the stator as a rotation device of the above examples. However, as shown in Fig. 9, electromagnets M of the stator may be arranged over or under a rotor R. This structure enables the size to be smaller.

In addition, in accordance with a required angle, the figures of the stator and the rotor of the rotation device can be appropriately changed into a suitable one by varying central angle, without limiting to the above circle or half circle, resulting in cost decrease.

## Claims

1. An apparatus (20) for rotating a base (30) for carrying a load comprising a rotation shaft (25) rotatably supported by a housing,
a rotor (24) fixed perpendicularly to the shaft wherein a set of magnetic poles (24a) are positioned at the periphery of the rotor with specific spacing intervals,
a stator (23) having a set of magnetic poles (23b) arranged so as to cooperate with the poles around the rotor,
at least one of the sets of poles being poles of electromagnets, and
means (40) for supplying and controlling electric power to the electromagnets,
alternate poles of one of the sets of poles having opposite polarity.

2. Apparatus according to claim 1 in which the set of magnetic poles of the stator are poles of electromagnets, the set of magnetic poles of the rotor are permanent magnets and it is the alternate poles of the rotor magnets that are of opposite polarity.

3. Apparatus according to claim 1 in which the set of magnetic poles of the rotor are poles of electromagnets, the set of magnetic poles of the stator are permanent magnets and it is the alternate poles of the stator magnets that are of opposite polarity.

4. Apparatus according to any preceding claim in which means (26) are provided for locking the base against rotation.

5. Apparatus according to any preceding claim in which the spacing intervals of the poles around the rotor are not the same as the spacing intervals of the poles of the stator.

6. Apparatus for rotating a base carrying heavy matter on which heavy matter is carried, comprising a rotation axis rotatably supported by a housing, a disc rotor or a circular arc rotor fixed vertically to an axial direction of the rotation axis wherein plural magnets are positioned at specific intervals on its periphery so as to alternate polarities, a stator having plural electromagnets fixed on the housing so as to face the magnet around the rotor or in an upper/lower relationship with the rotor, means for supplying and controlling electric power to the electromagnets, characterized by a rotation actuating device fixed on a frame and the base carrying heavy matter installed vertically or horizontally to the rotation axis.

7. An apparatus for rotating a base on which heavy matter is carried, comprising a rotation axis rotatably supported by a housing, a disc rotor or a circular arc rotor fixed vertically to an axial direction of the rotation axis wherein plural electromagnets are positioned at specifc intervals on its periphery, a stator having plural magnets fixed to the housing so as to alternate polarities and face the electromagnet around the rotor or in an upper/lower relationship with the rotor, means for supplying and controlling electric power to the electromagnet, characterized by a rotation actuating device fixed on a frame and the base carrying heavy matter installed vertically or horizontally to the rotation axis.

8. An apparatus for rotating a base, defined in claim or 7, on which heavy matter is carried, characterized by providing means for stopping the rotation of the base compulsorily.
